Europäisches Patentamt

**European Patent Office**

Office européen des brevets

(11) Publication number: **0 374 860 B1**

(12) **EUROPEAN PATENT SPECIFICATION**

(45) Date of publication of patent specification: **06.10.93**  (51) Int. Cl.⁵: **C09J 175/04**, C08G 18/28, A47G 27/00

(21) Application number: **89123500.4**

(22) Date of filing: **19.12.89**

The file contains technical information submitted after the application was filed and not included in this specification

(54) **Removable polyurethane adhesive and process for preparing the same.**

(30) Priority: **20.12.88 US 287192**

(43) Date of publication of application:
**27.06.90 Bulletin 90/26**

(45) Publication of the grant of the patent:
**06.10.93 Bulletin 93/40**

(84) Designated Contracting States:
**AT BE CH DE ES FR GB GR IT LI LU NL SE**

(56) References cited:
**EP-A- 0 000 288**
**EP-A- 0 305 175**
**US-A- 3 813 380**
**US-A- 4 687 851**

(73) Proprietor: **THE DOW CHEMICAL COMPANY**
**2030 Dow Center,**
**Abbott Road**
**Midland, MI 48640(US)**

(72) Inventor: **Mobley, Larry Wayne**
**4404 Honeysuckle Lane**
**Cohutta Georgia 30710(US)**

(74) Representative: **Huber, Bernhard, Dipl.-Chem.**
**et al**
**Patentanwälte**
**H. Weickmann, Dr. K. Fincke**
**F.A. Weickmann, B. Huber**
**Dr. H. Liska, Dr. J. Prechtel**
**Kopernikusstrasse 9**
**Postfach**
**86 08 20**
**D-81635 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to polyurethane adhesives, and to substrates coated with a layer of a polyurethane adhesive.

Polyurethane adhesives and sealants of various types are well known. See, e.g., U. S. Patent Nos. 3,779,794, 4,624,996 and 4,625,012.

In certain applications, it is desirable to provide an adhesive which, once applied to a substrate and cured, can be removably attached to an underlying surface. For these applications, a combination of tenacious bonding and yet virtual absence of residual adhesive on the underlying surface upon removal is desired. Upon removal, the exposed adhesive often picks up dirt and dust. It is further desirable that the adhesive is such that it can be washed without destroying its tackiness.

An example of such an application is carpet, especially carpet tiles or automotive floor mats, which must be adhered to the floor or other substrate. This is often done by applying a pressure sensitive adhesive to the floor, and applying the carpet to the adhesive. Although the carpet is easily removed when applied in this manner, the adhesive stays with the floor when the carpet is removed. Moreover, the adhesive often bonds too strongly to the carpet, and weaker carpet backings such as polymeric foams often tear and leave portions of the backing attached to the floor. This increases the difficulty of completely removing the carpet.

It would be desirable to provide a polyurethane adhesive which adheres tenaciously to a substrate, yet is cleanly removable and washable.

In one aspect, this invention is a polyurethane adhesive which is the reaction product of a reaction mixture comprising:

(a) a mixture of a monoalcohol and a polyether or polyester polyol, the mixture having an equivalent weight of at least 500 and containing from 10 to 70 mole percent monoalcohols,

(b) 0.2 to 1.2 equivalents, per equivalent of component (a), of a compound or mixture of compounds having an average of at least two active-hydrogen-containing groups per molecule and an equivalent weight of front 30 to 150, and

(c) an organic polyisocyanate or mixture thereof having an average functionality of 2.2 or less, in an amount sufficient to provide an isocyanate index of from 85 to 115,

said reaction mixture containing no greater than 0.1 weight percent of water, based on component (a).

In another aspect, this invention is a substrate coated with the polyurethane adhesive of this invention.

The polyurethane adhesive of this invention has several unexpected beneficial properties. Despite being fully cured, it has excellent inherent tack and, therefore, adheres tenaciously to many substrates. After application and curing, as described herein, it requires no "open-time" to development tackiness. Often, a substrate bearing this adhesive can be sold ortransported with a release backing layer over the adhesive. Upon removal of the backing layer, the adhesive is ready for immediate use. Because no large excess of isocyanate is used, there are no problems associated with users handling reactive chemicals. Accordingly, this adhesive can be applied to substrates which then can be easily and safely installed by consumers. This adhesive is also releaseable, and pulls cleanly from the surface to which it is adhered without leaving a significant residual film. Further, the adhesive layer is washable with water. Hence, this adhesive is particularly useful in applications where it is desired to provide a substrate which is removable from the surface to which it is adhered. In those applications, the adhesive layer often picks up dirt and foreign objects which, if not removed, decrease the effectiveness of the adhesive layer. The adhesive of this layer can be washed with water or other non-solvents for the polyurethane and, when dried, retains its tackiness.

The adhesive of this invention is the reaction product of a reaction mixture containing a certain high equivalent weight polyol mixture containing significant quantities of monoalcohols, low or negligible quantities of "chain extender" compounds and an organic polyisocyanate, wherein the reaction mixture is substantially devoid of water.

The polyol mixture used herein is a polyether or polyester polyol or mixture thereofcontaining from 10 to 70, preferably from 10 to 60, more preferably from 23 to 50 mole percent of a monoalcohol. The polyol mixture advantageously has a hydroxyl equivalent weight of at least 500, preferably at least 900, more preferably at least 1200. The upper range of equivalent weight for the polyol mixture is not especially critical as long as the polyol mixture is a liquid or low melting solid, but those polyol mixtures having an equivalent weight of less than 5000, more preferably less than 3500, most preferably less than 3000 are preferred because they have relatively low viscosities, and are therefore easier to process into polyurethanes. In some instances, when polyols having an average equivalent weight in excess of 1900 are used, the range of isocyanate index which provides good tackiness has been found to be small. This can make commercial processing difficult, and so equivalent weights in excess of 1900 are less preferred for that reason.

The polyether also advantageously has a nominal functionality (exclusive of monofunctional impurities) of from 2 to 4, preferably from 2 to 3.

The monoalcohol may be an impurity formed in the manufacture of the polyol (in the case of polyether polyols), or a separately manufactured material which is added to the polyol. In the case of polyether polyols, the monoalcohols is preferably a monofunctional polyether impurity which is generated in the polyol manufacture. In the preparation of polyethers, an alkylene oxide is added to a polyhydric initiator to form polyether chains. Under the conditions of the polymerization of alkylene oxides, certain alkylene oxides isomerize to the corresponding unsaturated alcohol. This alcohol then acts as a monofunctional initiator for polyether formation. As a result, the polyether polyol so formed contains a significant quantity of monofunctional polyethers having a terminal carbon-carbon double bond. The quantity of such monoalcohols can readily be determined by measurement of the quantity of this terminal unsaturation, which is equal to the quantity of monofunctional polyethers.

Unsaturation levels which provide a molar proportion of monoalcohols in the polyol mixture within the aforementioned ranges depend on the nominal functionality and the equivalent weight of the mixture. For a 2000 equivalent weight nominal diol, 0.2 meq/g of unsaturation corresponds to a monoalcohol content of 58 mole percent. For a like diol, 0.15 meq/g of unsaturation corresponds to 47 mole percent monoalcohol, and 0.1 meq/g corresponds to 33 mole percent monoalcohol . For a 2000 equivalent weight nominal triol, 0.2 meq/g unsaturation corresponds to 67 mole percent monoalcohol, 0.15 meq/g unsaturation corresponds to 50 mole percent monoalcohol, 0.1 meq/g unsaturation corresponds to 43 mole percent monoalcohol and 0.05 meq/g unsaturation corresponds to 25percent monoalcohol.

Since propylene oxide is the alkylene oxide which most readily undergoes isomerization to the unsaturated alcohol, poly(propylene oxide) polyols are most preferred herein. Thus, polyols prepared by polymerizing propylene oxide or a mixture containing at least 50, more preferably at least 70, weight percent propylene oxide are preferred. Particularly preferred are polyethers prepared by adding propylene oxide to an initiator having from 2 to 3 active hydrogen atoms to form a poly(propylene oxide) having an equivalent weight of at least 800, and then reacting same with ethylene oxide to form a poly(ethylene oxide) "cap" comprising from 10 to 25, more preferably from 14 to 20 percent of the weight of the resulting product. Polyethers made in this manner have significant quantities of monoalcohol impurities due to the use of propylene oxide, and have relatively high reactivity due to the presence of primary hydroxyl groups formed in the ethylene oxide capping step.

Polyethers containing monoalcohol impurities are conveniently prepared according to processes described in U. S. Patent Nos. 2,902,478, 3,040,076, 3,317,508, 3,341,597 and 3,445,525. The preferred process comprises adding an alkylene oxide to a polyhydric initiator using an alkali metal hydroxide catalyst and elevated temperatures and pressures. The isomerization of alkylene oxides, particularly propylene oxide, is favored by using relatively high catalyst concentration and higher temperatures. A catalyst concentration of from 0.01 to 5 weight percent, based on product polyol and a temperature of from 90°C to 160°C, preferably from 95°C to 140°C are desirable.

Of particular interest as component (a) are:

(1) nominally difunctional polymers of propylene oxide (PO) or a random copolymer of a major amount of PO and a minor amount of ethylene oxide (EO), optionally containing an EO cap as described before, having an equivalent weight of 900 to 2000, preferably 1000 to 1900, and 0.05 to 0.15 meq of terminal unsaturation/gram;

(2) mixtures of (i) nominally di- or trifunctional polymers of (PO) or a random copolymer of a major amount of PO and a minor amount of (EO), optionally containing an EO cap as described before and having an equivalent weight of at least 1500 and (ii) a nominally difunctional polymer of (PO) or a random copolymer of a major amount of PO and a minor amount of (EO), optionally containing an EO cap as described before, having an equivalent weight of 900 to 1499, the mixture having an average equivalent weight from 1100 to 1800 and 0.05 to 0.15 meq of terminal unsaturation/gram; and

(3) nominally trifunctional polymers of propylene oxide (PO) or a random copolymer of a major amount of PO and a minor amount of ethylene oxide (EO), optionally containing an EO cap as described before, having an equivalent weight of 1300 to 2000, and 0.05 to 0.15 meq of terminal unsaturation/gram.

In all of (1) - (3) above, it is preferred that the average actual functionality of the component (a) be less than 2.2, and more preferably 1.8 to 2.1.

Alternatively, the monoalcohol can be specially prepared in various processes and used to form a mixture with the polyol. The separately prepared monoalcohols is advantageously compatible with the polyol, preferably being of similar composition and equivalent weight. The equivalent weight of the specially prepared monoalcohol is such that the mixture thereof with the polyol has an average equivalent weight as described before.

For example, a polyether monoalcohol can be prepared directly by alkoxylating a monohydric initiator. Suitable conditions for this alkoxylation are as described with respect to the preparation of the polyether polyols. The alkoxylation of the monohydric initiator may be conducted separately from the preparation of the polyol, with the resulting monoalcohol compound being blended with polyol and the relative proportions stated before. However, it is possible to form a mixture of monohydric and polyhydric initiators, and to alkoxylate the mixture, thereby forming a mixture of polyols and monoalcohol compounds directly. When the monoalcohol material is prepared separately from the polyol, it is preferred that its composition be such that it is compatible with the polyol. In the case of polyethers, compatibility is promoted by the use of the same alkylene oxides, and the formation of comparable equivalent weight products.

Suitable monohydric initiators include monohydric alcohols having from 1 to 12 carbon atoms, glycol monoethers having from 2 to 6 carbon atoms in the glycol moiety, and dimethyl, -ethyl, -propyl or -butyl ethers of triols such as glycerol and trimethylolpropane, monocarboxylic acids such as, for example, acetic acid and benzoic acid, and mono-secondary amines such as, for example, diethyl amine and methyl ethyl amine. The preferred monohydric initiators include, for example, methanol, ethanol, propanol, butanol, alkylene oxide adducts of methanol, monoalkylethers of di- and triethylene and -propylene glycols.

Suitable monohydroxy-containing polyethers are commercially available, and these commercially available monols, particularly those which are primarily polymers of propylene oxide, are suitably used in this invention.

The polyol mixture is reacted with an organic polyisocyanate of $\leq 2.2$, preferably 1.9 to 2.15. Either aliphatic or aromatic polyisocyanates can be used in this invention to make foam. Suitable aliphatic polyisocyanates include, for example, ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3- and -1,4-diisocyanate, 1,5-diisocyanato-3,3,5-trimethylcyclohexane, 2,4- and/or 2,6-hexahydrotoluene diisocyanate, perhydro-2,4'- and/or -4,4'-diphenylmethanediisocyanate ($H_{12}$MDI) and isophorone diisocyanate.

Suitable aromatic polyisocyanates include, for example, 2,4- and/or 2,6-toluene diisocyanate (TDI), 2,4'-diphenylmethanediisocyanate, 1,3- and 1,4-phenylene diisocyanate, 4,4'-diphenylmethane diisocyanate (including mixtures thereof with minor quantities of the 2,4'-isomer), 1,5-naphthylene diisocyanate, triphenylmethane-4,4',4''-triisocyanate and polyphenylpolymethylene polyisocyanates. Trifunctional or higher functionality isocyanates, however, must be used in admixture with diisocyanates so that the functionality of the mixture is $\leq 2.2$.

In addition, derivatives and prepolymers of the foregoing polyisocyanates such as those containing urethane, carbodiimide, allophanate, isocyanurate, acylated urea, biuret, ester and similar groups are useful herein. Of these, prepolymers of TDI and MDI, and the so-called "liquid MDI" products which contain carbodiimide groups and have an equivalent weight of from 130 to 150 are of particular significance.

Of the foregoing polyisocyanates, TDI, MDI, isophorone diisocyanate, $H_{12}$MDI, hexamethylene diisocyanate, cyclohexane diisocyanate and derivatives thereof are preferred due to their cost, commercial availability and performance. TDI, MDI and derivatives and prepolymers of MDI having an equivalent weight of 190 or less are most preferred.

The polyisocyanate is advantageously used in an amount sufficient to provide an isocyanate index of from 85 to 115, preferably from 90 to 110, more preferably from 90 to 100. At higher indices, trimerization of the polyisocyanate occurs, causing the polyurethane to become less flexible than desired. At lower indices, the polyurethane is undercured, and has poor physical properties, especially low tensile strength.

In addition to the polyol mixture and the polyisocyanate, a chain extender material may be and preferentially is used in minor quantities, especially if the polyol is nominally difunctional. "Chain extenders", for the purposes of this invention, include compounds having two to four active hydrogen-containing groups per molecule and an equivalent weight of from 30 to 150 and preferably 53 to 100. It has been found that tack is better maintained over time when the chain extender has a functionality in excess of 2.2 and an equivalent weight in the preferred range.. The use of minor amounts of chain extender provides physical property enhancements. However, when the chain extender exceeds 10 percent, based on the weight of the polyol mixture, decreased elongation and tackiness are seen, so the chain extender level advantageously does not exceed that amount. Preferred levels of chain extender are from 0 to 7, more preferably from 0 to 5 parts by weight per 100 parts by weight polyol mixture, when the polyol component thereof has a nominal functionality of 3 or greater. When the polyol components of the polyol mixture have an average nominal functionality of less than 3, the preferred levels of chain extender are from 0.5 to 8, more preferably from 1 to 5 parts by weight per 100 parts by weight polyol mixture.

In particularly preferred embodiments using chain extenders or mixtures thereof with an average functionality of at least 2.2, the chain extender is advantageously used in an amount which provides from 0.2, preferably 0.3, more preferably 0.45, up to 1.2, preferably up to 0.9, more preferably up to 0.6 equivalents of chain extender per equivalent of component (a). This is particularly advantageous when the chain extender is or comprises a major amount of a tertiary amine-containing compound.

Hydroxyl-containing chain extenders include the alkylene glycols and glycol ethers such as, for example, ethylene glycol, 1,3-propylene glycol, 1,4-butylene glycol, 1,6-hexamethylene glycol, diethylene glycol, triethylene glycol, dipropylene glycol and tripropylene glycol, as well as a low equivalent weight polyethers initiated with di- to tetrahydric initiators. Among the alkylene glycols and glycol ethers, glycol ethers having an equivalent weight of from 53 to 100 are preferred. These include, for example, diethylene glycol, triethylene glycol, dipropylene glycol and tripropylene glycol. Among the low equivalent weight polyethers, those having an equivalent weight of from 53 to 300, more preferably 75 to 100 and which are initiated with polyols or polyamines such as ethylene diamine are especially preferred. These include propylene and/or ethylene oxide adducts of ethylene diamine and/or glycerine. Hydroxy-functional compounds having tertiary nitrogen atoms are of particular interest, as these provide some catalytic activity which promotes curing while simultaneously allowing the use of reduced levels of other catalysts. Among these hydroxy-functional compounds are alkanolamines such as triethanolamine, triisoproanolamine, alkyl-diethanolamine, alkyldiisopropanolamine and amine-initiated polyethers of from 53 to 100 equivalent weight. Amine chain extenders include, for example, diethyltoluene diamine, phenylene diamine, methylene bis(o-chloroaniline), NaCl blocked methylene bis(aniline), toluene diamine and aromatic diamines which are substituted at least one of the carbon atoms adjacent to the amine groups with a lower alkyl group. These amine chain extenders, however, are less preferred.

Generally, the reaction mixture may contain additional components such as, for example, catalysts, surfactants, colorants, fillers, flame retardants, antioxidants and antistatic agents, which may vary according to the desired attributes of the adhesive. Among the catalysts, those described in U. S. Patent No. 2,846,408 and 4,632,943 are suitable, with tertiary amine catalysts and organometallic catalysts, especially organotin, organoiron and organobismuth catalysts being preferred. Fillers and colorants such as, for example, carbon black, titanium oxide, alumina and calcium carbonate add a desired color and often reduce the cost of the adhesive. Up to 200, preferably from 0 to 100, more preferably from 0 to 30 parts by weight filler are used per 100 parts by weight polyol mixture. Above these levels, physical properties and tackiness are adversely affected.

It is generally desirable for most applications not to employ a blowing agent, as a non-cellular adhesive is usually stronger and thus performs better. However, it is within the scope of this invention to employ a blowing agent to form a cellular adhesive, provided the prescription against the use of significant amounts of water is followed. Suitable blowing agents include low boiling alkanes, halogenated alkanes, the so-called "azo" blowing agents, as well as other materials which generate a gas under the conditions encountered in the curing of the adhesive. When a cellular adhesive is desired, a preferred method of producing such cells involves whipping a gas such as, for example, air, nitrogen, argon and carbon dioxide into the reaction mixture. Equipment such as an Oakes foamer is suitable for this purpose.

The adhesive is formed by mixing the components and applying the mixture to a substrate where it is cured to a polyurethane. Application can be done in any convenient manner, such as through the use of a doctor blade to form the curing reaction mixture into a layer on the substrate. Curing can be done by any convenient method, although the preferred method is by the application of heat, such as is obtained, for example, by using a convection oven or infrared lamps. Heat is applied for a period of time sufficient to completely cure the mixture. Curing can be monitored by measuring the quantity of free isocyanate groups in the reaction mixture. Complete curing is evidenced by a substantial absence of isocyanate groups. Generally, heating at a temperature of from 90 to 200°C for a period of 1 minute to 2 hours is sufficient to completely cure the polyurethane.

The cured polyurethane so formed has inherent tackiness. In addition, it has the very desirable property of adhering tenaciously to a variety of surfaces, yet being removable. Further, on removal, the polyurethane adhesive leaves very little or no residual polymer on the underlying surface. This property renders this adhesive particularly useful in applications requiring removal and reinstallation of the article employing the adhesive.

The substrate to which the adhesive is applied is not in itself particularly critical. However, several types of substrates are generally preferred because the adhesive sticks better to them. These substrates include those which (a) are porous, (b) are wettable by the reaction mixture from which the adhesive is formed, (c) contain small quantities of absorbed water or small quantities of reactive hydroxyl or amine groups or (d) are polyurethanes.

5

EP 0 374 860 B1

Substrates of particular interest herein are textiles, especially carpets, and most especially carpets which contain a polymeric backing such as a synthetic latex or polyurethane backing. Other substrates of interest include, for example, paper, plastics, cloth, woodand metals. For instance, an easily installed and removed plastic or fabric drop cloth can be readily prepared by applying the adhesive of this invention to the plastic or fabric, so the resulting drop cloth can be glued into place and cleanly and easily removed when no longer needed.

As mentioned before, carpet is often glued down into place using pressure sensitive adhesives. It is often desirable to remove the carpet and reinstall it. In doing so, the adhesive stays with the floor and must be removed unless new carpet is installed. With this invention, the adhesive is applied to the underside of the carpet and remains with the carpet after the carpet is installed and subsequently removed. With certain types of carpet, such as, for example, automobile floor mats, entry mats and carpet tile, the adhesive layer often picks up particulate matter such as dirt or dust during use. This particulate matter reduces the available adhesive surface area, and thus renders it less effective. For this reason, it is desirable to clean the adhesive to remove this matter. With most adhesives, washing is either ineffective to remove such particulate matter, or else destroys the adhesive. The adhesive of this invention, however, is washable with water and ordinary water-soluble detergents and soaps. Solvent-based cleaners can also be used provided they do not excessively swell or dissolve the polyurethane, and do not damage the substrate. Upon cleaning and subsequent drying, the tackiness of the adhesive layer is restored.

Particularly suitable polyurethane-backed carpet include those having a substantially non-cellular backing as described, for example, in U. S. Patent Nos. 4,696,849 and 4,296,159, as well as those having a cellular backing, as described in U. S. Patent Nos. 3,821,130 and 3,862,879. The carpet itself advantageously comprises a woven or tufted facing layer, with a primary backing having a facing tufted therethrough being the preferred carpet material. The polyurethane backing is non-tacky and can be cellular or non-cellular. When a non-cellular polyurethane backing is used, it is still preferred to employ a substantially non-cellular polyurethane precoat which is attached directly to the carpet material, and to which the cellular polyurethane backing is attached.

The polyurethane adhesive of this invention can be applied directly to the polyurethane backing. In the most preferred embodiment, however, a non-woven scrim is partially embedded into a cellular polyurethane backing, and it is onto the exposed surface of this scrim that the adhesive is applied. Thus, the most preferred carpet comprises a facing layer coated with a non-cellular, non-tacky polyurethane, which is coated with a cellular, non-tacky polyurethane cushion layer into which a non-woven scrim is partially embedded, and the adhesive of this invention applied to the exposed surface of said scrim.

The adhesive of this invention can be applied to a backing of a releaseable material, and covered with another layer of such a material, to form a two-sided adhesive of predetermined size and shape. In this embodiment, the adhesive is advantageously cellular for many applications, such as gasketing. When the release material is removed, such two-sided adhesive is useful for gluing two or more objects together, and also as a gasketing material. Similarly, a single substrate can be coated on both sides with the adhesive of this invention to form a two-sided tape or adhesive or gasketing material.

Other uses for this invention will be apparent to those skilled in the art.

The following examples are given to illustrate the invention but are not intended to limit the scope thereof. Unless stated otherwise, all parts and percentages are given by weight.

Example 1

In this example, the adhesive of this invention was applied to a tufted carpet bearing a non-cellular polyurethane backing. The polyurethane backed carpet was prepared according to the teachings of U. S. Patent No. 4,696,849 to Mobley.

6

A polyurethane adhesive was prepared from the following formulation:

Table 1

| Component | Parts by Weight |
|---|---|
| Polyol A① | 98 |
| Amine-initiated polyol② | 2 |
| Carbon Black Dispersion③ | 1 |
| Organotin Catalyst | 0.05 |
| Isocyanate Prepolymer④ | 14.9 (100 index) |

①A 2000 equivalent weight, nominally difunctional ethylene-oxide terminated poly(propylene oxide) having 0.10 meq. unsaturation/gram and 18 weight percent ethylene oxide capping.
②A 278 molecular weight propylene oxide adduct of aminoethylethanolamine.
③A commercially available dispersion of carbon black in a polyether polyol.
④A 181 equivalent weight hard segment prepolymer of diphenylmethanediisocyanate having an average functionality of about 2.0.

Polyol A, the amine-initiated polyol and carbon black were throughly mixed with minimal entrainment of air. The prepolymer was then added and thoroughly mixed, followed by addition and mixing in of catalyst, again with minimal air entrainment. This mixture was then applied to the polyurethane backing of the carpet sample, and cured in an oven at 130°C for six minutes. Upon removal from the oven, the adhesive layer was covered with a polyethylene barrier film. The barrier film adhered tenaciously to the adhesive layer, but when the barrier film was removed, the adhesive layer stayed with the carpet. The barrier film was essentially free of residual adhesive.. The adhesive layer retained its tack upon prolonged exposure to the air.

Example 2

In this example, the adhesive of this invention was applied to a tufted carpet bearing a frothed polyurethane cushion backing. The polyurethane-backed carpet was prepared according to the general teaching of U. S. Patent No. 3,862,879.

An adhesive of this invention was applied to the polyurethane surface of the carpet sample as indicted in Example 1. After the adhesive layer cooled to room temperature, the barrier film was removed, and the sample attached to a substrate by contacting the substrate with the adhesive layer. The carpet sample and substrate were placed in a 150°C oven for two weeks, after which time the adhesive remained firmly bonded to the substrate. The carpet sample and substrate were placed outdoors for one month, and again the adhesive remains firmly bonded to the substrate. After the outdoor exposure, the carpet sample was removed from the substrate. The substrate was free of residual adhesive. The adhesive layer was still tacky, and adhered tightly to the substrate when reapplied thereto.

Example 3

A polyurethane-backed carpet with a non-woven scrim release backing was prepared by applying a frothed polyurethane-forming composition to the back of a carpet sample, and prior to curing, applying a non-woven polyester scrim to the surface of the polyurethane-forming composition layer so that, when the composition was cured, the scrim was adhered to the surface of the frothed polyurethane layer. The polyurethane-forming composition was as described in U. S. Patent No. 3,862,879. The product so prepared is as described in U. S. Patent No. 4,853,280.

An adhesive layer of this invention was applied to the release backing layer of the carpet sample, as described in Example 1. Excellent adhesive properties were obtained. The adhesive layer adhered strongly to a variety of substrates, yet can be removed easily, leaving essentially no residual adhesive on the substrate.

Example 4

Example 2 was repeated, this time using an adhesive having the formulation:

## Table 2

| Component | Parts by Weight |
|---|---|
| Polyol A[1] | 30 |
| Polyol B[2] | 70 |
| Organotin Catalyst | 0.05 |
| Isocyanate Prepolymer[3] | 9.4 (100 index) |

[1]A 2000 equivalent weight, nominally difunctional poly(propylene oxide) having 0.10 meq. unsaturation/gram and 18 weight percent ethylene oxide capping.
[2]A 2000 equivalent weight, nominally trifunctional poly(propylene oxide) having 0.8meq. unsaturation/gram and 17 weight percent ethylene oxide capping.
[3]A 181 equivalent weight hard segment prepolymer of diphenylmethanediisocyanate having an average functionality of about 2.0.

Comparable results were obtained. Because some crosslinking was incorporated into the adhesive through the use of a trifunctional polyol, good results were obtained even though no chain extender was used.

8

Example 5

Example 1 was repeated, this time using an adhesive having the formulation:

Table 3

| Component | Parts by Weight |
|---|---|
| Polyol A[1] | 96 |
| Diethylene glycol | 4 |
| Organotin Catalyst | 0.05 |
| Isocyanate Prepolymer[2] | 23.2 (100 index) |

[1]A 2000 equivalent weight, nominally difunctional poly(propylene oxide) having 0.10 meq. unsaturation/gram and 18 weight percent ethylene oxide capping.
[2]A 181 equivalent weight hard segment prepolymer of diphenylmethanediisocyanate having an average functionality of about 2.0.

Again, excellent tackiness was obtained, and the adhesive was readily removed from an underlying substrate, leaving only a small amount of residual polymer on the substrate.

Example 6

An automobile car mat made of a tufted carpet backed with a noncellular polyurethane backing was coated with an adhesive prepared according to the general method described in Example 1. The resulting mat was placed over the carpet on the floor on the front driver's side of an automobile. The automobile was used normally for several weeks, during which time the mat remained fixed firmly into place. After two weeks, the mat was removed. It removed cleanly from the underlying carpet. The underlying carpet showed no signs of staining, marring, residual adhesive, or any other adverse effects from being in contact with the adhesive of the car mat. Because the adhesive layer had picked up dirt from the carpet, it was washed with soap and water. The dirt was easily cleaned off the adhesive layer. The cleaned mat was then permitted to air dry. When the dried mat was reinstalled, it adhered to the underlying carpet as strongly as before.

Example 7

Using the general method described in Example 1, several adhesives of this invention were prepared and evaluated using a rolling ball test (ASTM 3121). The rolling ball test was conducted immediately after curing, and then again after the sample has aged one week at ambient conditions. The formulations used and the results of the rolling ball test are as indicated in Table 4 following. Sample 7-A, which employed an amine-initiated chain extender, displayed the best combination of cure and tack.

Table 4

| Component/Property | Sample No. | | | |
|---|---|---|---|---|
| | 7-A | 7-B | 7-C | 7-D |
| Polyol C[1] | 98 | 0 | 0 | 97.4 |
| Polyol D[2] | 0 | 98 | 98 | 0 |
| Chain Extender A[3] | 2 | 0 | 0 | 0 |
| Glycerine | 0 | 2 | 0 | 0 |
| Chain Extender B[4] | 0 | 0 | 2 | 0 |
| Chain Extender C[5] | 0 | 0 | 0 | 2.6 |
| Isocyanate Prepolymer (index)[6] | 100 | 0 | 0 | 100 |
| Isocyanate Blend[7] | 0 | 100 | 100 | 0 |
| Carbon Black | 0.3 | 0.3 | 0.3 | 0.3 |
| Organotin catalyst A[8] | 0 | 0.06 | 0.06 | 0 |
| Topcat 230 | 0 | 0.06 | 0.06 | 0 |
| Organotin catalyst B[9] | 0.03 | 0 | 0 | 1.0 |
| Cure Time, min | 3 | 3 | 5 | 7 |
| Hot Roll Ball Tack, cm | 0.8 | 1.0 | 0.5 | 0.7 |
| Hot Roll Ball Tack, 1 week, cm | 0.8 | 4.0 | 0.7 | 0.7 |

[1]See Table 1. [2]A 2125 equivalent weight nominally difunctional poly (PO) having about 0.12 meq/g terminal unsaturation. [3]See note [3] in Table 1. [4]An adduct of glycerin and PO having an equivalent weight of 88. [5]An adduct of trimethylolpropane and EO having an equivalent weight of 91. [6]See note [6] of Table 1. [7]A 60/40 blend of the isocyanate prepolymer of note [6] and a 143 equivalent weight liquid MDI. The blend has an average functionality of about 2.0. [8]UL-28, sold by Witco Company. [9]UL-6, sold by Witco Company.

Example 8

Example 1 was repeated, except the organotin catalyst level wass reduced to 0.03 parts by weight, the isocyanate index was reduced to 85, and curing was done at 250°F (120°C) for 10 minutes. A carpet precoated with a non-cellular polyurethane backing was the substrate. Using the same formulation, a free-standing adhesive was prepared by curing the formulation in a 5" x 5" x 1/8" (130mm x 130mm x 3.2 mm) stainless steel mold which was sprayed with a mold release agent. After curing for 10 minutes at 250°F (120°C), the samples were demolded and covered with a polyethylene barrier film until ready for testing. These adhesives were designated Sample No. 8-A for convenience.

The rolling ball test was conducted on the free-standing samples, after removal of the barrier film. Results are as indicated in Table 5. To the adhesive layer of the carpet samples were attached a second piece of a tufted carpet, with the face of the carpet contacting the adhesive layer. There was an overlap of 3" x 1" (76mm x 76mm) between the adhesive layer and the face of the second piece of carpet. A load of 0.5 psi (3.5 kPa) was applied to this assembly for three days at room temperature. The assembly was then tested with an MTS tensile tester to determine tensile shear strength. The grips of the MTS were spread apart at the rate of 10"/minute (250 mm/min) until the specimen was pulled apart. The maximum load was measured and divided by surface area to obtain the results indicated in Table 5.

A second formulation (Sample No. 8-B) was prepared in like manner as Sample 8-A, except Polyol A was replaced with a 934 equivalent weight, nominally difunctional poly(propylene oxide) having an EO cap of 17.1 weight percent and 0.02 meq/g unsaturation. The results are as indicated in Table 5.

A third formulation (Sample No. 8-C) was prepared in like manner as Sample 8-A, except Polyol A was replaced with a 1000 equivalent weight, nominally difunctional poly(propylene oxide) having 0.03 meq/g unsaturation. The results are as indicated in Table 5. All samples exhibit good adhesion.

Table 5

| Sample No. | Property | |
|---|---|---|
| | Rolling Ball Test, cm | Tensile Shear Test, lb/in$^2$ (kPa) |
| 8-A | 0.62 | 1.4 (9.8) |
| 8-B | 0.66 | 2.3 (16) |
| 8-C | 0.49 | 2.7 (19) |

In addition, a fourth formulation was prepared, substituting 98 parts of a 26/72 mixture of a difunctional 650 molecular weight poly(tetramethyleneoxide) and a 1828 molecular weight monofunctional random copolymer of 85 weight % PO and 15% weight EO for the polyol in Example 1. This formulation exhibited a value of about 0.7 lb/in$^2$ (5 kPa) on the tensile shear test and 0.52 cm on the rolling ball test.

**Claims**

**Claims for the following Contracting States : AT, BE, CH, DE, FR, GB, GR, IT, LI, LU, NL, SE**

1. A polyurethane adhesive which is the reaction product of a reaction mixture comprising:
   (a) a mixture of a monoalcohol and a polyether or polyester polyol, the mixture having an equivalent weight of at least 500 and containing from 10 to 70 mole percent monoalcohols,
   (b) 0.2 to 1.2 equivalents, per equivalent of component (a), of a compound or mixture of compounds having an average of at least two active-hydrogen-containing groups per molecule and an equivalent weight of from 30 to 150, and
   (c) an organic polyisocyanate or mixture thereof having an average functionality of 2.2 or less, in an amount sufficient to provide an isocyanate index of from 85 to 115,
   said reaction mixture containing no greater than 0.1 weight percent of water, based on component (a).

2. An adhesive as claimed in Claim 1 wherein component (a) is a polyether polyol or mixture thereof having from 0.05 to 0.15 meq/g of unsaturated monoalcohol impurities, and component (b) is a polyether polyol or an alkylene glycol ether having an equivalent weight of from 30 to 100.

3. An adhesive as claimed in Claim 2 wherein component (b) has an average functionality of at least 2.2 and an equivalent weight of from 30 to 100 and said reaction mixture contains from 0.3 to 1.2 equivalent of component (b) per equivalent of component (a), or said polyether polyol of component (a) has an average nominal functionality of at least 2.2 and said reaction mixture contains from 1 to 5 weight percent of component (b).

4. An adhesive as claimed in Claim 3 wherein component (a) is a nominally difunctional polymer of PO (propylene oxide) or a random copolymer of a major amount of PO and a minor amount of EO (ethylene oxide) having an equivalent weight of from 900 to 2000, a nominally trifunctional polymer of PO or a random copolymer of a major amount of PO and a minor amount of EO having an equivalent weight of from 1300 to 2000, or a mixture of (i) nominally di- or trifunctional polymer of PO or a random copolymer of a major amount of PO and a minor amount of EO having an equivalent weight of at least about 1500 and (ii) a nominally difunctional polymer of PO or a random copolymer of a major amount of PO and a minor amount of EO having an equivalent weight of 900 to 1499, the mixture having an average equivalent weight of from 1100 to 1800 and from 0.05 to 0.15 meq of terminal unsaturation/gram.

5. An adhesive as claimed in Claim 4 wherein component (a) contains an ethylene oxide cap comprising from 10 to 25 weight percent of the polymer and component (b) is an alkanolamine or an amine-initiated polyether.

6. A substrate coated with the polyurethane adhesive of any one of the preceding claims.

7. A carpet comprising a topmost facing layer, a cellular or non-cellular, non-tacky polymeric backing attached directly or indirectly to said facing layer, and a bottommost layer of the polyurethane adhesive of any one of Claims 1 to 5.

8. A polyurethane adhesive comprising a reaction product of a reaction mixture comprising 98 parts by weight of a 2000 equivalent weight, nominally difunctional ethylene oxide-terminated poly(propylene oxide) having 0.10 meq. unsaturation per gram and 18 weight percent ethylene oxide capping, 2 parts by weight of a a 278 molecular weight propylene oxide adduct of aminoethylethanolamine, 1 part by weight of a carbon black dispersion in a polyether polyol, 0.05 part by weight of an organotin catalyst and 14.9 parts by weight (100 index) of a 181 equivalent weight hard segment prepolymer of diphenylmethanediisocyanate.

9. A process for preparing a polyurethane adhesive which comprises reacting a reaction mixture comprising:

(a) a mixture of a monoalcohol and a polyether or polyester polyol, the mixture having an equivalent weight of at least 500 and containing from 10 to 70 mole percent monoalcohols,
(b) 0.2 to 1.2 equivalents, per equivalent of component (a), of a compound or mixture of compounds having an average of at least two active hydrogen-containing groups per molecule and an equivalent weight of from 30 to 150, and
(c) an organic polyisocyanate, or mixture thereof having an average functionality of 2.2 or less, in an amount sufficient to provide an isocyanate index of from 85 to 115,
said reaction mixture containing no greater than 0.1 weight percent of water, based on the weight of component (a).

10. A carpet comprising:

(a) a facing layer comprising a primary backing having a yarn facing tufted therethrough to form a topmost side and a bottommost side;
(b) a non-cellular non-tacky polyurethane layer attached to the bottommost side of said facing layer;
(c) a cellular, non-tacky polyurethane layer attached to the non-cellular, non-tacky polyurethane layer; and
(d) a layer of a polyurethane adhesive attached directly or indirectly to said cellular, non-tacky polyurethane layer, wherein said polyurethane adhesive is the reaction product of a reaction mixture comprising

(1) a mixture of a monoalcohol and a polyether or polyester polyol, the mixture having an equivalent weight of at least 500 and containing from 10 to 70 mole percent monoalcohols,
(2) 0.2 to 1.2 equivalents, per equivalent of component (1) of a compound or mixture of compounds having an average of at least two active hydrogen-containing groups per molecule and an equivalent weight of from 30 to 150, and
(3) an organic polyisocyanate or mixture thereof having an average functionality of 2.2 or less, in an amount sufficient to provide an isocyanate index of 85 to 115,
said reaction mixture containing no greater than 0.1 weight percent of water, based on component (a).

**Claims for the following Contracting State : ES**

1. A process for preparing a polyurethane adhesive which comprises reacting a reaction mixture comprising:

   (a) a mixture of a monoalcohol and a polyether or polyester polyol, the mixture having an equivalent weight of at least 500 and containing from 10 to 70 mole percent monoalcohols,

   (b) 0.2 to 1.2 equivalents, per equivalent of component (a) of a compound or mixture of compounds having an average of at least two active hydrogen-containing groups per molecule and an equivalent weight of from 30 to 150 and

   (c) an organic polyisocyanate, or mixture thereof having an average functionality of 2.2 or less, in an amount sufficient to provide an isocyanate index of from 85 to 115,

   said reaction mixture containing no greater than 0.1 weight percent of water, based on the weight of component (a).

2. A process as claimed in Claim 1 wherein component (a) is a polyether polyol or mixture thereof having from 0.05 to 0.15 meq/g of unsaturated monoalcohol impurities, and component (b) is a polyether polyol or an alkylene glycol ether having an equivalent weight of from 30 to 100.

3. A process as claimed in Claim 2 wherein component (b) has an average functionality of at least 2.2 and an equivalent weight of from 30 to 100 and said reaction mixture contains from 0.3 to 1.2 equivalent of component (b) per equivalent of component (a), or said polyether polyol of component (a) has an average nominal functionality of at least 2.2 and said reaction mixture contains from 1 to 5 weight percent of component (b).

4. A process as claimed in Claim 3 wherein component (a) is a nominally difunctional polymer of PO (propylene oxide) or a random copolymer of a major amount of PO and a minor amount of EO (ethylene oxide) having an equivalent weight of from 900 to 2000, a nominally trifunctional polymer of PO or a random copolymer of a major amount of PO and a minor amount of EO having an equivalent weight of from 1300 to 2000, or a mixture of (i) nominally di- or trifunctional polymer of PO or a random copolymer of a major amount of PO and a minor amount of EO having an equivalent weight of at least about 1500 and (ii) a nominally difunctional polymer of PO or a random copolymer of a major amount of PO and a minor amount of EO having an equivalent weight of 900 to 1499, the mixture having an average equivalent weight of from 1100 to 1800 and from 0.05 to 0.15 meq of terminal unsaturation/gram.

5. A process as claimed in Claim 4 wherein component (a) contains an ethylene oxide cap comprising from 10 to 25 weight percent of the polymer and component (b) is an alkanolamine or an amine-initiated polyether.

6. A substrate coated with the polyurethane adhesive of any one of the preceding claims.

7. A carpet comprising a topmost facing layer, a cellular or non-cellular, non-tacky polymeric backing attached directly or indirectly to said facing layer, and a bottommost layer of the polyurethane adhesive of any one of Claims 1 to 5.

8. A process as claimed in claim 1 comprising reacting a reaction mixture comprising 98 parts by weight of a 2000 equivalent weight, nominally difunctional ethylene oxide-terminated poly(propylene oxide) having 0.10 meq. unsaturation per gram and 18 weight percent ethylene oxide capping, 2 parts by weight of a a 278 molecular weight propylene oxide adduct of aminoethylethanolamine, 1 part by weight of a carbon black dispersion in a polyether polyol, 0.05 part by weight of an organotin catalyst and 14.9 parts by weight (100 index) of a 181 equivalent weight hard segment prepolymer of diphenylmethanediisocyanate.

9. A carpet comprising:

   (a) a facing layer comprising a primary backing having a yarn facing tufted therethrough to form a topmost side and a bottommost side;

   (b) a non-cellular non-tacky polyurethane layer attached to the bottommost side of said facing layer;

(c) a cellular, non-tacky polyurethane layer attached to the non-cellular, non-tacky polyurethane layer; and

(d) a layer of a polyurethane adhesive attached directly or indirectly to said cellular, non-tacky polyurethane layer, wherein said polyurethane adhesive is the reaction product of a reaction mixture comprising

(1) a mixture of a monoalcohol and a polyether or polyester polyol, the mixture having an equivalent weight of at least 500 and containing from 10 to 70 mole percent monoalcohols.

(2) 0.2 to 1.2 equivalents, per equivalent of component (1) of a compound or mixture of compounds having an average of at least two active hydrogen-containing groups per molecule and an equivalent weight of from 30 to 150 and

(3) an organic polyisocyanate or mixture thereof having an average functionality of 2.2 or less, in an amount sufficient to provide an isocyanate index of 85 to 115,

said reaction mixture containing no greater than 0.1 weight percent of water, based on component (a).

## Patentansprüche
### Patentansprüche für folgende Vertragsstaaten : AT, BE, CH, DE, FR, GB, GR, IT, LI, LU, NL, SE

1. Polyurethanklebstoff, der das Reaktionsprodukt eines Reaktionsgemisches ist, umfassend:

(a) ein Gemisch eines Monoalkohols und eines Polyether- oder eines Polyesterpolyols, wobei das Gemisch ein Äquivalenzgewicht von wenigstens 500 hat und von 10 bis 70 Mol-% Monoalkohole enthält,

(b) 0,2 bis 1,2 Äquivalente pro Äquivalent der Komponente (a) einer Verbindung oder eines Gemisches von Verbindungen mit durchschnittlich wenigstens zwei aktiven Wasserstoff enthaltenden Gruppen pro Molekül und einem Äquivalenzgewicht von 30 bis 150, und

(c) ein organisches Polyisocyanat oder ein Gemisch davon mit einer durchschnittlichen Funktionalität von 2,2 oder weniger, in einer Menge die ausreichend ist, um einen Isocyanatindex von 85 bis 115 zu ergeben,

wobei das Reaktionsgemisch nicht mehr als 0,1 Gew.-% Wasser, basierend auf der Komponente (a), enthält.

2. Klebstoff nach Anspruch 1, worin Komponente (a) ein Polyetherpolyol oder ein Gemisch davon ist mit 0,05 bis 0,15 mÄq/g ungesättigten Monoalkoholverunreinigungen und Komponente (b) ein Polyetherpolyol oder ein Alkylenglykolether ist mit einem Äquivalenzgewicht von 30 bis 100.

3. Klebstoff nach Anspruch 2, worin die Komponente (b) eine durchschnittliche Funktionalität von wenigstens 2,2 und ein Äquivalenzgewicht von 30 bis 100 hat und worin das Reaktionsgemisch 0,3 bis 1,2 Äquivalente der Komponente (b) pro Äquivalent der Komponente (a) enthält oder, worin das Polyetherpolyol der Komponente (a) eine durchschnittliche nominelle Funktionalität von wenigstens 2,2 hat und worin das Reaktionsgemisch von 1 bis 5 Gew.-% der Komponente (b) enthält.

4. Klebstoff nach Anspruch 3, worin die Komponente (a) ein nominell difunktionelles Polymer von PO (Propylenoxid) oder ein statistisches Copolymer aus einem größeren Anteil PO und einem kleineren Anteil EO (Ethylenoxid) ist, mit einem Äquivalenzgewicht von 900 bis 2000, ein nominell trifunktionelles Polymer von PO oder ein statistisches Copolymer aus einem größeren Anteil PO und einem kleineren Anteil EO, mit einem Äquivalenzgewicht von 1300 bis 2000, oder ein Gemisch von (i) einem nominell di- oder trifunktionellen Polymer von PO oder einem statistischen Copolymer aus einem größeren Anteil PO und einem kleineren Anteil EO, mit einem Äquivalenzgewicht von wenigstens ca. 1500 und (ii) einem nominell difunktionellen Polymer von PO oder einem statistischen Copolymer aus einem größeren Anteil PO und einem kleineren Anteil EO, mit einem Äquivalenzgewicht von 900 bis 1499 ist, wobei das Gemisch ein durchschnittliches Äquivalenzgewicht von 1100 bis 1800 und von 0,05 bis 0,15 mÄq an terminaler Ungesättigtheit/Gramm hat.

5. Klebstoff nach Anspruch 4, worin die Komponente (a) einen Ethylenoxidterminus (cap) enthält, der 10 bis 25 Gew.-% des Polymers umfaßt und worin die Komponente (b) ein Alkanolamin- oder ein Amininitiierter Polyether ist.

6. Substrat, welches mit dem Polyurethan-Klebstoff nach einem der vorhergehenden Ansprüche beschichtet ist.

**7.** Bodenbelag, umfassend eine oberste Deckschicht (facing layer), eine zelluläre oder nicht-zelluläre nichtklebrige polymere Rückseite, die direkt oder indirekt an der Deckschicht angebracht ist und eine unterste Schicht eines Polyurethan-Klebstoffs nach einem der Ansprüche 1 bis 5.

**8.** Polyurethan-Klebstoff, umfassend ein Reaktionsprodukt eines Reaktionsgemisches, umfassend 98 Gewichtsanteile eines nominell difunktionellen Ethylenoxid-terminierten Poly(propylenoxids), eines Äquivalenzgewichts von 2000 mit 0,10 mÄq Ungesättigtheit pro Gramm und 18 Gew.-% terminalen Ethylenoxid, 2 Gewichtsanteile eines Propylenoxidaddukts von Aminoethylethanolamin mit einem Moleklargewicht von 278, 1 Gewichtsanteil Kohleschwarz in einem Polyetherpolyol, 0,05 Gewichtsanteile eines Organozinnkatalysators und 14,9 Gewichtsanteile (100 Index) eines Hartsegmentprepolymers von Diphenylmethandiisocyanat mit einem Äquivalenzgewicht von 181.

**9.** Verfahren zur Herstellung eines Polyurethan-Klebstoffes, umfassend die Reaktion eines Reaktionsgemisches, umfassend.

(a) ein Gemisch aus einem Monoalkohol und einem Polyether- oder Polyesterpolyol, wobei das Gemisch ein Äquivalenzgewicht von wenigstens 500 hat und von 10 bis 70 Mol-% Monoalkohole enthält,

(b) 0,2 bis 1,2 Äquivalente pro Äquivalent der Komponente (a) einer Verbindung oder eines Gemisches von Verbindungen mit durchschnittlich wenigstens zwei, aktiven Wasserstoff enthaltenden Gruppen pro Molekül und einem Äquivalenzgewicht von 30 bis 150, und

(c) ein organisches Polyisocyanat oder ein Gemisch davon mit einer durchschnittlichen Funktionalität von 2,2 oder weniger, in einer Menge die ausreichend ist, um einen Isocyanatindex von 85 bis 115 zu ergeben,

wobei das Reaktionsgemisch nicht mehr als 0,1 Gew.-% Wasser, basierend auf dem Gewicht der Komponente (a), enthält.

**10.** Bodenbelag, umfassend

(a) eine Deckschicht, umfassend eine primäre Rückseite mit einer dadurch getufteten Garnoberseite, um eine oberste Seite und eine unterste Seite zu bilden;

(b) eine nicht-zelluläre, nicht-klebrige Polyurethanschicht, die an der untersten Seite der Deckschicht angebracht ist;

(c) eine zelluläre, nicht klebrige Polyurethanschicht, die an der nicht-zellulären, nicht-klebrigen Polyurethanschicht angebracht ist, und

(d) eine Schicht aus einem Polyurethan-Klebstoff, die direkt oder indirekt an der zellulären, nichtklebrigen Polyurethanschicht angebracht ist, worin der Polyurethan-Klebstoff das Reaktionsprodukt eines Reaktionsgemisches ist, umfassend

(1) ein Gemisch eines Monoalkohols und eines Polyether- oder Polyesterpolyols, wobei das Gemisch ein Äquivalenzgewicht von wenigstens 500 hat und 10 bis 70 Mol-% Monoalkohole enthält,

(2) 0,2 bis 1,2 Äquivalente pro Äquivalent der Komponente (1) einer Verbindung oder eines Gemisches von Verbindungen mit durchschnittlich wenigstens zwei aktive Wasserstoff enthaltenden Gruppen pro Molekül und einem Äquivalenzgewicht von 30 bis 150, und

(3) ein organisches Polyisocyanat oder ein Gemisch davon mit einer durchschnittlichen Funktionalität von 2,2 oder weniger, in einer Menge, die ausreichend ist, um einen Isocyanatindex von 85 bis 115 zu ergeben,

wobei das Reaktionsgemisch nicht mehr als 0,1 Gew.-% Wasser, basierend auf der Komponente (a) enthält.

**Patentansprüche für folgenden Vertagsstaat : ES**

**1.** Verfahren zur Herstellung eines Polyurethanklebstoffes, umfassend die Umsetzung eines Reaktionsgemisches, umfassend:

(a) ein Gemisch eines Monoalkohols und eines Polyether- oder eines Polyesterpolyols, wobei das Gemisch ein Äquivalenzgewicht von wenigstens 500 hat und von 10 bis 70 Mol-% Monoalkohole enthält,

(b) 0,2 bis 1,2 Äquivalente pro Äquivalent der Komponente (a) einer Verbindung oder eines Gemisches von Verbindungen mit durchschnittlich wenigstens zwei aktiven Wasserstoff enthaltenden Gruppen pro Molekül und einem Äquivalenzgewicht von 30 bis 150, und

(c) ein organisches Polyisocyanat oder ein Gemisch davon mit einer durchschnittlichen Funktionalität von 2,2 oder weniger, in einer Menge die ausreichend ist, um einen Isocyanatindex von 85 bis 115 zu ergeben,

wobei das Reaktionsgemisch nicht mehr als 0,1 Gew.-% Wasser, basierend auf dem Gewicht der Komponente (a), enthält.

2. Verfahren nach Anspruch 1, worin Komponente (a) ein Polyetherpolyol oder ein Gemisch davon ist mit 0,05 bis 0,15 mÄq/g ungesättigten Monoalkoholverunreinigungen und Komponente (b) ein Polyetherpolyol oder ein Alkylenglykolether ist mit einem Äquivalenzgewicht von 30 bis 100.

3. Verfahren nach Anspruch 2, worin die Komponente (b) eine durchschnittliche Funktionalität von wenigstens 2,2 und ein Äquivalenzgewicht von 30 bis 100 hat und worin das Reaktionsgemisch 0,3 bis 1,2 Äquivalente der Komponente (b) pro Äquivalent der Komponente (a) enthält oder, worin das Polyetherpolyol der Komponente (a) eine durchschnittliche nominelle Funktionalität von wenigstens 2,2 hat und worin das Reaktionsgemisch von 1 bis 5 Gew.-% der Komponente (b) enthält.

4. Verfahren nach Anspruch 3, worin die Komponente (a) ein nominell difunktionelles Polymer von PO (Propylenoxid) oder ein statistisches Copolymer aus einem größeren Anteil PO und einem kleineren Anteil EO (Ethylenoxid) ist, mit einem Äquivalenzgewicht von 900 bis 2000, ein nominell trifunktionelles Polymer von PO oder ein statistisches Copolymer aus einem größeren Anteil PO und einem kleineren Anteil EO, mit einem Äquivalenzgewicht von 1300 bis 2000, oder ein Gemisch von (i) einem nominell di- oder trifunktionellen Polymer von PO oder einem statistischen Copolymer aus einem größeren Anteil PO und einem kleineren Anteil EO, mit einem Äquivalenzgewicht von wenigstens ca. 1500 und (ii) einem nominell difunktionellen Polymer von PO oder einem statistischen Copolymer aus einem größeren Anteil PO und einem kleineren Anteil EO, mit einem Äquivalenzgewicht von 900 bis 1499 ist, wobei das Gemisch ein durchschnittliches Äquivalenzgewicht von 1100 bis 1800 und von 0,05 bis 0,15 mÄq an terminaler Ungesättigtheit/Gramm hat.

5. Verfahren nach Anspruch 4, worin die Komponente (a) einen Ethylenoxidterminus (cap) enthält, der 10 bis 25 Gew.-% des Polymers umfaßt und worin die Komponente (b) ein Alkanolamin- oder ein Amininitiierter Polyether ist.

6. Substrat, welches mit dem Polyurethan-Klebstoff nach einem der vorhergehenden Ansprüche beschichtet ist.

7. Bodenbelag, umfassend eine oberste Deckschicht (facing layer), eine zelluläre oder nicht-zelluläre nicht-klebrige polymere Rückseite, die direkt oder indirekt an der Deckschicht angebracht ist und eine unterste Schicht eines Polyurethan-Klebstoffs nach einem der Ansprüche 1 bis 5.

8. Verfahren nach Anspruch 1, umfassend die Umsetzung eines Reaktionsgemisches, umfassend 98 Gewichtsanteile eines nominell difunktionellen Ethylenoxid-terminierten Poly(propylenoxids), eines Äquivalenzgewichts von 2000 mit 0,10 mÄq Ungesättigtheit pro Gramm und 18 Gew.-% terminalen Ethylenoxid, 2 Gewichtsanteile eines Propylenoxidaddukts von Aminoethylethanolamin mit einem Molekulargewicht von 278, 1 Gewichtsanteil Kohleschwarz in einem Polyetherpolyol, 0,05 Gewichtsanteile eines Organozinnkatalysators und 14,9 Gewichtsanteile (100 Index) eines Hartsegmentprepolymers von Diphenylmethandiisocyanat mit einem Äquivalenzgewicht von 181.

9. Bodenbelag, umfassend
    (a) eine Deckschicht, umfassend eine primäre Rückseite mit einer dadurch getufteten Garnoberseite, um eine oberste Seite und eine unterste Seite zu bilden;
    (b) eine nicht-zelluläre, nicht-klebrige Polyurethanschicht, die an der untersten Seite der Deckschicht angebracht ist;
    (c) eine zelluläre, nicht klebrige Polyurethanschicht, die an der nicht-zellulären, nicht-klebrigen Polyurethanschicht angebracht ist, und
    (d) eine Schicht aus einem Polyurethan-Klebstoff, die direkt oder indirekt an der zellulären, nicht-klebrigen Polyurethanschicht angebracht ist, worin der Polyurethan-Klebstoff das Reaktionsprodukt eines Reaktionsgemisches ist, umfassend

(1) ein Gemisch eines Monoalkohols und eines Polyether- oder Polyesterpolyols, wobei das Gemisch ein Äquivalenzgewicht von wenigstens 500 hat und 10 bis 70 Mol-% Monoalkohole enthält,

(2) 0,2 bis 1,2 Äquivalente pro Äquivalent der Komponente (1) einer Verbindung oder eines Gemisches von Verbindungen mit durchschnittlich wenigstens zwei aktive Wasserstoff enthaltenden Gruppen pro Molekül und einem Äquivalenzgewicht von 30 bis 150, und

(3) ein organisches Polyisocyanat oder ein Gemisch davon mit einer durchschnittlichen Funktionalität von 2,2 oder weniger, in einer Menge, die ausreichend ist, um einen Isocyanatindex von 85 bis 115 zu ergeben,

wobei das Reaktionsgemisch nicht mehr als 0,1 Gew.-% Wasser, basierend auf der Komponente (a) enthält.

**Revendications**

**Revendications pour les Etats contractants suivants : AT, BE, CH, DE, FR, GB, GR, IT, LI, LU, NL, SE**

1. Adhésif à base de polyuréthanne qui est le produit de la réaction d'un mélange réactionnel comprenant

(a) un mélange d'un monoalcool et d'un polyéther ou polyester polyol, le mélange ayant une masse équivalente d'au moins 500 et contenant de 10 à 70 pour-cent en moles de monoalcools.

(b) 0,2 à 1,2 équivalents, par équivalent de composant (a), d'un composé ou d'un mélange de composés ayant une moyenne d'au moins deux groupes contenant de l'hydrogène actif par molécule et une masse équivalente de 30 à 150, et

(c) un polyisocyanate organique ou un mélange de polyisocyanates ayant une fonctionnalité moyenne de 2,2 ou moins, en une quantité suffisante pour fournit un indice d'isocyanate de 85 à 115,

ledit mélange réactionnel ne contenant pas plus de 0,1 pour-cent en poids d'eau, par rapport au composant (a).

2. Adhésif selon la revendication 1, dans lequel le composant (a) est un polyéther polyol ou un mélange de polyéther polyols ayant de 0,05 à 0,15 méq/g d'impuretés monoalcool insaturé, et le composant (b) est un polyéther polyol ou un éther glycolique d'alkylène ayant une masse équivalente de 30 à 100.

3. Adhésif selon la revendication 2, dans lequel le composant (b) possède une fonctionnalité moyenne d'au moins 2,2 et une masse équivalente de 30 à 100 et ledit mélange réactionnel contient de 0,3 à 1,2 équivalent de composant (b) par équivalent de composant (a), ou ledit polyéther polyol du composant (a) possède une fonctionnalité nominale moyenne d'au moins 2,2 et ledit mélange réactionnel contient de 1 à 5 pour-cent en poids de composant (b).

4. Adhésif selon la revendication 3, dans lequel le composant (a) est un polymère nominalement difonctionnel de OP (oxyde de propylène) ou un copolymère statistique d'une quantité importante de OP et d'une quantité peu importante de OE (oxyde d'éthylène) ayant une masse équivalente de 900 à 2 000, un polymère de OP nominalement trifonctionnel ou un copolymère statistique d'une quantité importante de OP et d'une quantité peu importante de OE ayant une masse équivalente de 1 300 à 2 000, ou un mélange de (i) un polymère de OP nominalement di- ou trifonctionnel ou un copolymère statistique d'une quantité importante de OP et d'une quantité peu importante de OE ayant une masse équivalente d'au moins 1 500 et de (ii) un polymère de OP nominalement difonctionnel ou un copolymère statistique d'une quantité importante de OP et d'une quantité peu importante de OE ayant une masse équivalente de 900 à 1 499, le mélange ayant une masse équivalente moyenne de 1 100 à 1 800 et de 0.05 à 0.15 méq d'insaturation d'extrémité/gramme.

5. Adhésif selon la revendication 4, dans lequel le composant (a) contient une coiffe d'oxyde d'éthylène comprenant de 10 à 25 pour-cent en poids du polymère et le composant (b) est une alcanolamine ou un polyéther initié par une amine.

6. Substrat revêtu avec l'adhésif à base de polyuréthanne selon l'une quelconque des revendications précédentes.

7. Tapis comprenant une couche endroit supérieure, un support polymère cellulaire ou non-cellulaire, non collant fixé directement ou indirectement à ladite couche endroit, et comme couche inférieure un adhésif à base de polyuréthanne selon l'une quelconque des revendications 1 à 5.

**8.** Adhêsif à base de polyuréthanne comprenant un produit de réaction d'un mélange réactionnel comprenant 98 parties en poids d'un poly(oxyde de propylène) de masse équivalente 2 000, nominalement difonctionnel ayant 0,10 méq. d'insaturation/gramme et coiffé d'oxyde de propylène à raison de 18 pour-cent en poids, deux parties en poids d'un produit d'addition d'oxyde de propylène de masse moléculaire de 278 avec de l'aminoéthyléthanolamine, 1 partie en poids d'une dispersion de noir de carbone dans un polyéther polyol, 0,05 partie en poids d'un catalyseur à base d'organoétain et 14,9 parties en poids (indice 100) d'un prépolymère à segment rigide de diphénylméthanediisocyanate.

**9.** Procédé pour préparer un adhésif à base de polyuréthanne qui consiste à faire réagir un mélange réactionnel comprenant:

a) un mélange d'un monoalcool et d'un polyéther ou polyester polyol, le mélange ayant une masse équivalente d'au moins 500 et contenant de 10 à 70 pour-cent en moles de monoalcools,

b) 0,2 à 1,2 équivalents, par équivalent de composant (a), d'un composé ou d'un mélange de composés ayant une moyenne d'au moins deux groupes contenant de l'hydrogène actif par molécule et une masse équivalente de 30 à 150, et

c) un polyisocyanate organique ou un mélange de polyisocyanates organiques ayant une fonctionnalité moyenne de 2,2 ou moins, en une quantité suffisante pour fournir un indice d' isocyanate de 85 à 115,

ledit mélange réactionnel ne contenant pas plus de 0,1 pour-cent en poids d'eau, par rapport au poids du composant (a).

**10.** Tapis comprenant:

(a) une couche endroit constituée d'un support primaire, traversée sur le côté endroit par des fils touffetés de façon à former un côté supérieur et un côté inférieur ;

(b) une couche de polyuréthanne non-cellulaire non collante fixée au côté inférieur de ladite couche endroit;

(c) une couche de polyuréthanne, cellulaire non collante fixée à la couche de polyuréthanne non-cellulaire, non collante; et

(d) une couche d'un adhésif à base de polyuréthanne fixée directement ou indirectement à ladite couche de polyuréthanne cellulaire, non collante, dans laquelle ledit adhésif à base de polyuréthanne est le produit de la réaction du mélange réactionnel comprenant

(1) un mélange d'un monoalcool et d'un polyéther ou polyester polyol, le mélange ayant une masse équivalente d'au moins 500 et contenant de 10 à 70 pour-cent en moles de monoalcools,

(2) 0,2 à 1,2 équivalents, par équivalent de composant (1), d'un composé ou d'un mélange de composés ayant une moyenne d'au moins deux groupes contenant de l'hydrogène actif par molécule et une masse équivalente de 30 à 150, et

(3) un polyisocyanate organique ou un mélange de polyisocyanates organiques ayant une fonctionnalité moyenne de 2,2 ou moins, en une quantité suffisante pour fournir un indice d'isocyanate de 85 à 115,

ledit mélange réactionnel ne contenant pas plus de 0,1 pour-cent en poids d'eau, par rapport au poids du composant (1).

**Revendications pour l'Etat contractant suivant : ES**

**1.** Procédé pour préparer un adhésif à base de polyuréthanne qui consiste à faire réagir un mélange réactionnel comprenant:

(a) un mélange d'un monoalcool et d'un polyéther ou polyester polyol, le mélange ayant une masse équivalente d'au moins 500 et contenant de 10 à 70 pour-cent en moles de monoalcools.

(b) 0,2 à 1,2 équivalents, par équivalent de composant (a), d'un composé ou d'un mélange de composés ayant une moyenne d'au moins deux groupes contenant de l'hydrogène actif par molécule et une masse équivalente de 30 à 150, et

(c) un polyisocyanate organique ou un mélange de polyisocyanates organiques ayant une fonctionnalité moyenne de 2,2 ou moins, en une quantité suffisante pour fournit un indice d' isocyanate de 85 à 115,

ledit mélange réactionnel ne contenant pas plus de 0,1 pour-cent en poids d'eau, par rapport au poids du composant (a).

EP 0 374 860 B1

2. Procédé selon la revendication 1, dans lequel le composant (a) est un polyéther polyol ou un mélange de polyéther polyols ayant de 0,05 à 0,15 méq/gramme d'impuretés monoalcool insaturé, et le composant (b) est un polyéther polyol ou un éther glycolique d'alkylène ayant une masse équivalente de 30 à 100.

3. Procédé selon la revendication 2, dans lequel le composant (b) possède une fonctionnalité moyenne d'au moins 2,2 et une masse équivalente de 30 à 100 et ledit mélange réactionnel contient de 0,3 à 1,2 équivalents de composant (b) par équivalent de composant (a), ou ledit polyéther polyol du composant (a) possède une fonctionnalité nominale moyenne d'au moins 2,2 et ledit mélange réactionnel contient de 1 à 5 pour-cent en poids de composant (b).

4. Procédé selon la revendication 3, dans lequel le composant (a) est un polymère nominalement difonctionnel de OP (oxyde de propylène) ou un copolymère statistique d'une quantité importante de OP et d'une quantité peu importante de OE (oxyde d'éthylène) ayant une masse équivalente de 900 à 2 000, un polymère de OP nominalement trifonctionnel ou un copolymère statistique d'une quantité importante de OP et d'une quantité peu importante de OE ayant une masse équivalente de 1 300 à 2 000, ou un mélange de (i) un polymère de OP nominalement di- ou trifonctionnel ou un copolymère statistique d'une quantité importante de OP et une quantité peu importante de OE ayant une masse équivalente d'au moins 1 500 et de (ii) un polymère de OP nominalement difonctionnel ou un copolymère statistique d'une quantité importante de OP et d'une quantité peu importante de OE ayant une masse équivalente de 900 à 1 499, le mélange ayant une masse équivalente moyenne de 1 100 à 1 800 et de 0,05 à 0,15 méq d'insaturation d'extrémité/gramme.

5. Procédé selon la revendication 4, dans lequel le composant (a) contient une coiffe d'oxyde d'éthylène comprenant de 10 à 25 pour-cent en poids du polymère et le composant (b) est une alcanolamine ou un polyéther initié par une amine.

6. Substrat revêtu avec l'adhésif à base de polyuréthanne selon l'une quelconque des revendications précédentes.

7. Tapis comprenant une couche endroit supérieure, un support polymère cellulaire ou non-cellulaire, non collant directement ou indirectement fixé à ladite couche endroit, et une couche inférieure d'adhésif à base de polyuréthanne selon l'une quelconque des revendications 1 à 5.

8. Procédé selon la revendication 1, consistant à faire réagir un mélange réactionnel comprenant 98 parties en poids d'un poly(oxyde de propylène) de masse équivalente 2 000, nominalement difonctionnel ayant 0,10 méq. d'insaturation par gramme et coiffé d'oxyde de propylène à raison de 18 pour-cent en poids, 2 parties en poids d'un produit d'addition d'oxyde de propylène de masse moléculaire 278 avec de l'aminoéthyléthanolamine, 1 partie en poids d'une dispersion de noir de carbone dans un polyéther polyol, 0,05 partie en poids d'un catalyseur à base d'organoétain et 14,9 parties en poids (indice 100) d'un prépolymère à segment rigide de diphénylméthanediisocyanate de masse équivalente 181.

9. Tapis comprenant :
   (a) une couche endroit constituée d'un support primaire, traversée sur le côté endroit par des fils touffetés de façon à former un côté supérieur et un côté inférieur ;
   (b) une couche de polyuréthanne non-cellulaire non collante fixée au côté le plus au-dessous de ladite couche endroit;
   (c) une couche de polyuréthanne, cellulaire non collante fixée à la couche de polyuréthanne non- cellulaire, non collante ; et
   (d) une couche d'un adhésif à base de polyuréthanne fixée directement ou indirectement à ladite couche de polyuréthanne cellulaire, non collante, dans laquelle ledit adhésif à base de polyuréthanne est le produit de la réaction du mélange réactionnel comprenant
      (1) un mélange d'un monoalcool et d'un polyéther ou polyester polyol, le mélange ayant une masse équivalente d'au moins 500 et contenant de 10 à 70 pour-cent en moles de monoalcools,
      (2) 0,2 à 1,2 équivalents, par équivalent du composant (1), d'un composé ou d'un mélange de composés ayant une moyenne d'au moins deux groupes contenant de l'hydrogène actif par molécule et une masse équivalente de 30 à 150, et

19

(3) un polyisocyanate organique ou un mélange de polyisocyanates organiques ayant une fonctionnalité moyenne de 2,2 ou moins, en une quantité suffisante pour fournir un indice d'isocyanate de 85 à 115,

ledit mélange réactionnel ne contenant pas plus de 0,1 pour-cent en poids d'eau, par rapport au poids du composant (1).